# EUROPEAN PATENT SPECIFICATION

(11) **EP 3 599 128 B1**
(45) Date of publication and mention of the grant of the patent: **11.05.2022**
(21) Application number: 18185381.3
(22) Date of filing: 25.07.2018
(51) Int. Cl.: B60N 2/90, A61H 9/00

(54) **VEHICLE SEAT MASSAGE DEVICE**
FAHRZEUGSITZMASSAGEVORRICHTUNG
DISPOSITIF DE MASSAGE DE SIÈGE DE VÉHICULE

(43) Date of publication of application: 29.01.2020
(73) Proprietor: FICO CABLES LDA, 4470-263 Vermoim-Maia (PT)
(72) Inventor: DE CASTRO FARIA, Manuel António, 4470-263 Vermoim-Maia (PT); DA SILVA LOPES, Pedro João, 4470-263 Vermoim-Maia (PT)
(74) Representative: Mader, Joachim

(56) References cited:
- DE-A1- 10 063 478
- DE-A1-102008 025 059
- DE-U1-202014 104 010
- JP-U- S6 379 927

## Description

### 1. Field of the invention

The present invention relates to a vehicle seat massage device that is integrated into a seat of vehicle, particularly of a car. The vehicle seat massage device is pneumatically actuated and comprises a plurality of air bladders that provide a massage effect to the passenger.

### 2. Prior art

More than a transportation means, car manufactures want that a car provides to the occupant a wellness experience. Thereby, the seat has the most important role. There are many ways to emphasize the comfort feeling that can be achieved by the seat. But the main task is to avoid any possible discomfort from several causes like natural back pains, long journey position, in-satisfaction for the seat support, and the like. Taking this into account, the possibility to have a massage will reduce the odds of having a discomfortable seating. The massage should be adjustable in terms of the body area and intensity. Pneumatic massage systems are a versatile technical solution which allows to the seat makers to apply the most convenient solution. For this purpose, there are two main kinds of pneumatic massage devices proposed: Surface A type devices have air bladders fixed on the front face of the seat foam and surface B type devices have air bladders positioned on the back face of the seat foam.

The massage effect is provided by sequentially inflating and deflating of the respective air bladder. For such inflating and deflating a control unit can be used that comprises a plurality of 3/2 electric air valves can be used. The 3/2 solenoid air valves have two positions (ON and OFF) and three connections (air inlet, air outlet to air bladder, air outlet to ambience). The 3/2 solenoid valves are usually NC-valves (normally closed) that are closed in the OFF position when no current is applied. In the non-energized state (OFF) the 3/2 solenoid valve blocks the air flow from the pump side (air inlet) to the air bladder and opens the air bladder connection to the outlet to ambience. Thus, in the OFF state the pressure inside the air bladder decreases to the environment level (deflated). When the 3/2 solenoid valve is energized, it allows the air flow from the pump (air inlet) to the air outlet to air bladder such that the air bladder is inflated. At the end of the inflation step, the 3/2 solenoid valve is turned "OFF" which starts the deflation step of the air bladder. In this step the air "outlet" to the air bladder of the 3/2 solenoid valve is open to the air outlet to ambience and air is vented to ambience through this outlet until the air bladder is deflated. The combination of inflation/deflation sequences of the several bladders lead to the desired massage effect to the passenger.

There are for instance known vehicle seat massage devices according to DE 10 2008 025 059 A1, DE 100 63 478 A1, DE 20 2014 104 010 U1 and JP S63 79927 U.

However, such prior art control units are technically complex, prone to failure and expensive due to the use for each of the bladders of such an electric 3/2 air valve. The present invention aims to overcome such drawbacks of prior art devices.

### 3. Summary of the invention

The above mentioned drawbacks are solved by a vehicle seat massage device according to claim 1 and a method for the operation of a vehicle seat massage device according to claim 9.

In particular the above mentioned problems are solved by a vehicle seat massage device, comprising a plurality of air bladders, which can be arranged at the seat part or the backrest of a vehicle seat; an air pump for supplying air to the air bladders; a plurality of air distribution elements for distributing air from the air pump to the plurality of air bladders; a plurality of 2/2 valves for controlling the air flow to the air bladders; and a plurality of air vent openings for venting air out of the air bladders, wherein the air vent openings are arranged at an outlet of the 2/2 valve to the respective air bladder.

Since the vehicle seat massage device uses the particular arrangement of a plurality of air vent openings, which are each in fluid-connection with a respective one of the plurality of air bladders, and a plurality of 2/2 valves, the plurality of air bladders can be selectively inflated and deflated for providing the desired massage effect. 2/2 valves are inexpensive compared to 3/2 valves and are technically less complex. Usually the costs of 2/2 solenoid valves are only halve of the costs of corresponding 3/2 solenoid valves. 2/2 valves only have one air inlet and one air outlet.

In the on-state the air inlet is open to the air outlet. In the off-state the air outlet is blocked compared to the air inlet. Thus, when one 2/2 valve is in the on state the bladder is inflated. In this state air from the air pump is provided through the air distribution elements and through the 2/2 valve to the corresponding bladder. Simultaneously, some air is vented through one of the air vent openings into the ambience. However, as the flow of air through the 2/2 valve is higher than the flow of air through the air vent the respective air bladder will inflate.

On the other hand, if the 2/2 valve is in the off state the bladder is deflated. No air is flowing from the air pump through the 2/2 valve to the air bladder but air is flowing from the bladder through the air vent to ambience.

Preferably, for each bladder or a group of bladders an individual 2/2 valve is provided. Therefore, each bladder or a group of bladders can be selectively inflated and deflated.

Preferably, the 2/2 valves are electrically controlled valves. An electric control of the 2/2 valves is easy and provides for an arbitrary and individual actuation of the 2/2 valves according various desired massage programs.

Preferably, the 2/2 valves are solenoid valves or shape memory alloy valves. Such kinds of 2/2 valves are inexpensive and mechanically reliable for providing millions of switch cycles required for a pneumatic massage device.

Preferably, the air vent openings have an effective opening size that is smaller than the effective opening size of the respective air distribution element and of the respective 2/2 valve. The smaller effective opening size of the air vent opening ensures in an easy manner that the air vent throughput is smaller than the air throughput of the air distribution element and 2/2 valve during inflating of the respective air bladder. This ensures fast inflation. On the other hand, the effective opening size of the air vent opening must be large enough for allowing a fast deflation of the respective air bladder.

Preferably, the effective opening size of the air vent openings is 30% to 70%, preferably 40% to 60%, more preferably 50% of the effective opening size of the respective air distribution element and of the respective 2/2 valve. This ensures that the air vent throughput is about 30% to 70%, preferably about 40% to 60%, more preferably about 50% of the air throughput of the air distribution element and the respective 2/2 valve. If the effective opening size of the air vent opening is about 50% of the effective opening size or inner cross section of the air distribution element and the 2/2 valve then the inflation of the air bladder is approximately as fast as the deflation thereof.

Preferably, the massage device is adapted to be arranged at the A-surface of a vehicle seat. This arrangement ensures a good force transmission from the air bladders to the back of the passenger. Further, the air bladders can be made smaller compared to an arrangement at B-surface of a vehicle seat.

Preferably, the air distribution elements comprise air tubes.

Preferably, the vehicle seat massage device further comprises an electronic control unit that can individually control the 2/2 valves.

The above mentioned problems are also solved by a method for the operation of a vehicle seat massage device as described above, wherein the method comprises the following steps:
a. actuating the air pump;
b. electrically opening a 2/2 valve for selectively supplying air from the air pump to the respective air bladder for inflating the air bladder;
c. simultaneously to step b. venting air out of an air vent opening which is in fluid connection with the respective air bladder;
d. after step b. closing the 2/2 valve for stopping the air flow from the air pump to the respective air bladder; and
e. simultaneously to step d. venting air out of the air vent opening for deflating the air bladder.

By venting air out of an air vent opening during inflating and deflating an air bladder it is possible to use inexpensive and reliable 2/2 valves for the inflation control. This makes the overall vehicle seat massage device affordable and reliable over the complete lifetime of the vehicle.

Preferably, the steps b. to e. are repeated continuously such that the respective air bladder is continuously inflated and deflated. This ensures the desired massage effect of the respective air bladders.

Preferably, the steps b. to e. are performed
a. with respect to all air bladders simultaneously; or
b. with respect to air bladders of the same height at a backrest of a seat simultaneously but with a predetermined time interval to air bladders of other heights; or
c. with respect to a single air bladder individually; or
d. with respect to symmetrically arranged air bladders simultaneously.

Due to the use of electrically controlled 2/2 valves it is possible to select any desired massage program with the vehicle seat massage device.

### 4. Short description of the drawings

In the following a preferred embodiment of the invention is described with respect to the figures in which shows:
- Fig. 1:: a schematic structural view of a preferred embodiment of a vehicle seat massage device;
- Fig. 2:: a schematic pneumatic view of a vehicle seat massage device not according to the present invention;
- Fig. 3A-C:: pneumatic partial views of Fig. 2 in three stages of operation;
- Fig. 4:: a three-dimensional view of a vehicle seat massage device not according to the present invention;
- Fig. 5:: a partial three dimensional view of Fig. 4;
- Fig. 6:: a side sectional view of an exemplary vehicle seat;
- Fig. 7:: a pneumatic partial view of a vehicle seat massage device not according to the present invention; and
- Fig. 8:: a pneumatic partial view of an embodiment of a vehicle seat massage device according to the present invention.

### 5. Description of preferred embodiments

In the following a preferred embodiment of the invention is described with respect to the figures.

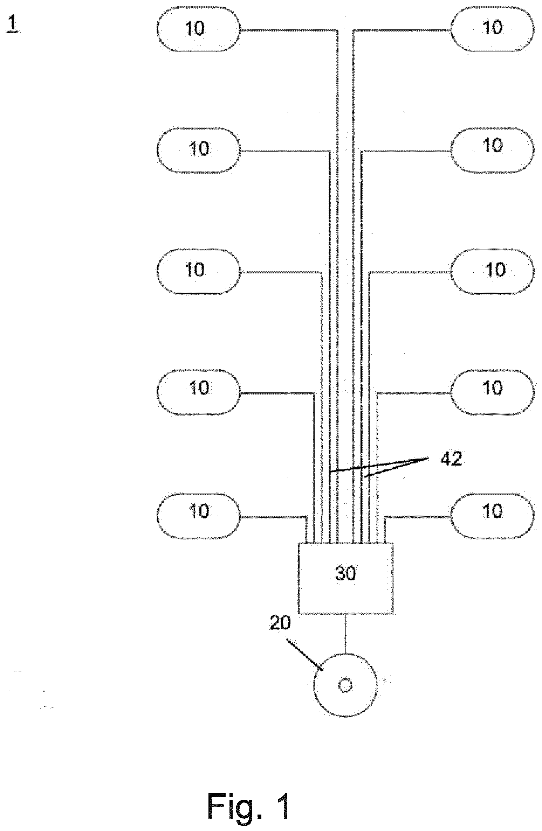

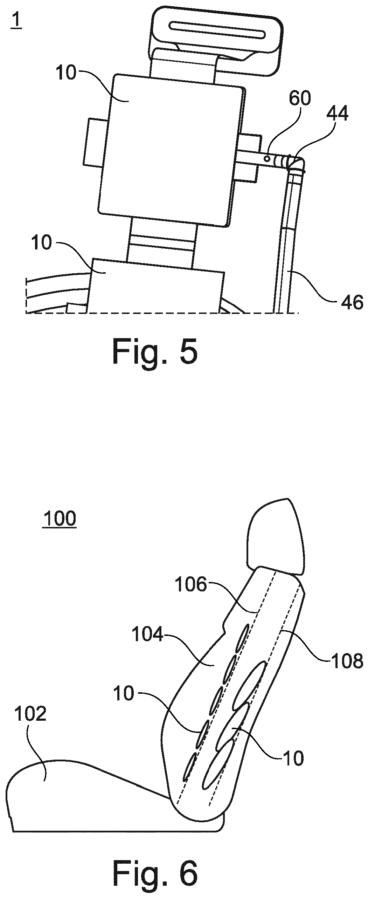

Fig. 1 shows a structural view of a preferred embodiment of vehicle seat massage device 1 comprising preferably ten individually controlled air bladders 10. The number and arrangement of the air bladders 10 can vary according the desired needs and vehicle seat 100. As it can be seen in Fig. 6, the air bladders 10 can generally be arranged in the A surface 106 and the B surface 108 of the seat part 102 and/or the backrest 104 of the seat 100. However, it is preferred that the air bladders 10 are arranged in the A surface 106 of the seat such that other air bladders, for example for a lumbar support or the like, can be arranged within the B surface 108.

The air bladders 10 are individually connected by means of air distribution elements 40, like plastic air tubes 46 or plastic air connectors 44 with an electronic control unit 30 that distributes and controls compressed air provided by an electronic air pump 20 via a common supply line 42. Preferably, the air pump 20 is continuously operating and does continuously supply compressed air when the massage function is activated. The electronic control unit 30 comprises a plurality of 2/2 valves, one 2/2 valve for each air bladder 10, for selectively distributing the compressed air to the respective air bladder 10. By means of the 2/2 valves the respective air bladders 10 can be individually inflated and deflated. The sequence of inflation and deflation of the air bladders 10 provides the desired massage effect of the vehicle seat massage device 1. The frequency, maximum pressure, which air bladder 10 at a seat 100 is activated, operation pattern of inflation of different air bladders 10, and other parameters of a massage program, can be selected by the passenger. The massage program performed by the vehicle seat massage device 1 is then electronically controlled by the electronic control unit 30.

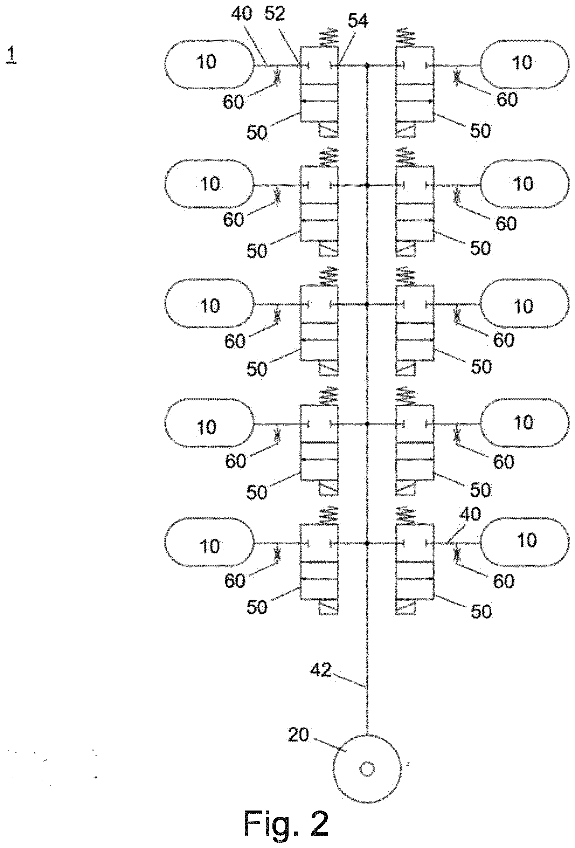

Fig. 2 shows details of the pneumatic structure of a vehicle seat massage device 1 of Fig. 1, not according to the present invention. The compressed air of the air pump 20 is distributed by a common air line 42 to every 2/2 valve 50. The 2/2 valves are preferably electrically actuated 2/2 solenoid air valves, having an air inlet 54 and an air outlet 52. From the 2/2 valves 50 individual air distribution elements 40, like plastic air tubes 46, air connectors 44, or the like, provide a fluid connection from the air outlets 52 of the 2/2 valves 50 to the respective air bladders 10. Air vent openings 60 are arranged in fluid connection with the air bladders 10. Preferably they are arranged at the respective air distribution element 40 as shown in Fig. 2. Alternatively, they can also be arranged directly at an outlet 52 of the 2/2 valve 50 to the respective air bladder 10 or directly at the respective air bladder 10 or at an intermediary air connector 44. The air vent openings 60 are always open and provide a flow of air therethrough with a predetermined air vent throughput. By selecting the effective opening of the air vent opening 60 the air vent throughput can be defined. The air vent throughput is about 30% to 70%, preferably about 40% to 60%, more preferably about 50% of the air throughput of the air distribution element 40 and the respective 2/2 valve 50. This ensures on the one hand a fast inflation and a fast deflation of the respective air bladder 10. If the effective opening size of the air vent opening 60 is about 50% of the effective opening size or inner cross section of the air distribution element 40 and the 2/2 valve 50 then the inflation of the air bladder 10 is approximately as fast as the deflation thereof.

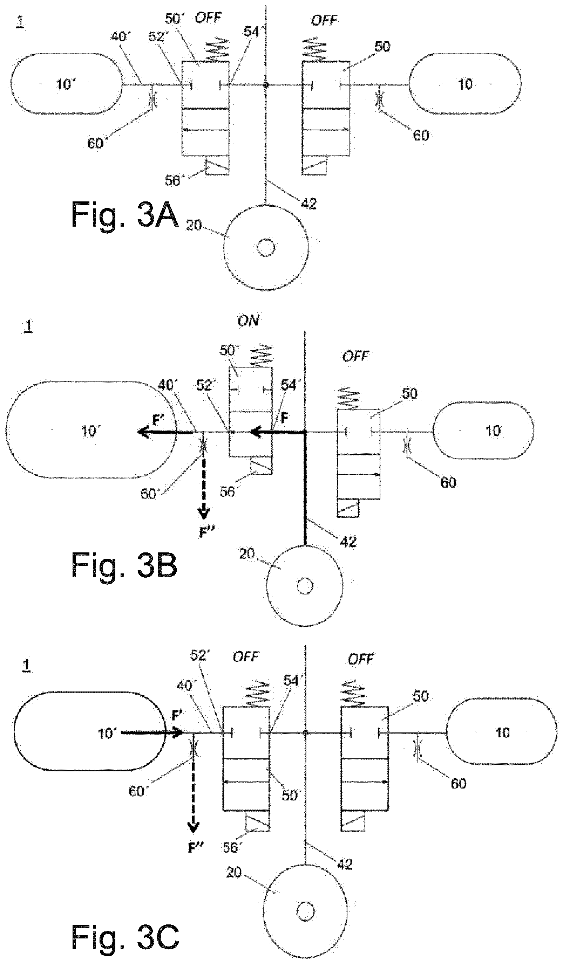

The vehicle seat massage device 1 in such a configuration operates as shown in Figs. 3A to 3C exemplary for one bladder 10'. If the massage device 1 is activated, the air pump 20 is supplied with electrical current and is providing compressed air via common supply line 42 to the air inlet 54' of 2/2 valve 50'. In Fig. 3A the 2/2 valve 50' is still in the OFF state, in which the solenoid 56' is not activated and air inlet 54' and air outlet 52' is blocked. The 2/2 valve 50' is of the NC-type, i.e. it is normally closed when not activated by electrical current.

If the 2/2 valve 50' is opened by supplying the solenoid 56' with electric current by the electronic control unit 30, as shown in Fig. 3B, compressed air is flowing from the air pump through the 2/2 valve 50'. The air flow through the 2/2 valve has a throughput of F. A portion F" of the air throughput F is directly vented to ambiance via air vent opening 60' arranged at the air distribution element 40'. The remaining portion F' of the air throughput F is provided to the air bladder 10' and inflates air bladder 10'.

When the respective air bladder 10' is inflated by the compressed air to the desired amount the 2/2 valve is closed by disengaging the solenoid 56' by the electronic control unit 30 as shown in Fig. 3C. Then, the air supply to the respective bladder 10' stops and the air bladder 10' starts deflating. In this step air is vented out of the air bladder 10' through the air vent opening 60' into the ambiance. The air throughput out of the air bladder F' equals the air throughput through F" the air vent opening 60'. The air bladder 10' deflates due to the elasticity of their polymer material and due to any pressure applied by the passenger to the air bladder 10'.

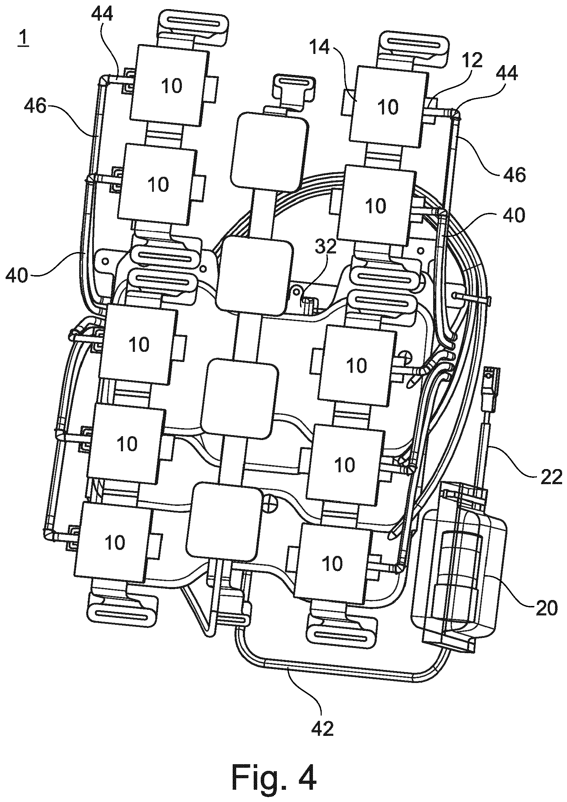

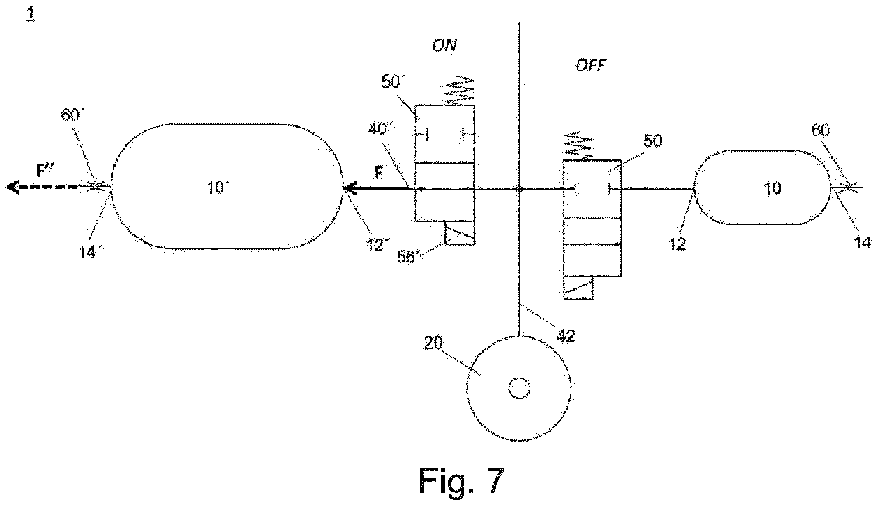

Fig. 7 shows a pneumatic partial view of a vehicle seat massage device 1, not according to the present invention, wherein the vent opening 60 is arranged at the air bladder 10. In Fig. 7 the left bladder 10' is presently inflated, wherein the 2/2 valve 50' is set to the ON state and the solenoid 56' is engaged. The air pump 20 provides an air throughput F through the 2/2 valve 50' and into the bladder 10'. Simultaneously the air vent 60' vents an air throughput F'', which is smaller than the air throughput F, out of bladder 10'. Thus, bladder 10' is inflated. If the 2/2 valve 50' is set to the OFF state, the air throughput F stops and the air vent 60' vents air out of the bladder 10' for deflating bladder 10'. The air vent opening 60, 60' can be arranged at an end 14, 14' of the respective bladder 10,10' distal from the inlet 12, 12' of the bladder 10 (see also Fig. 4).

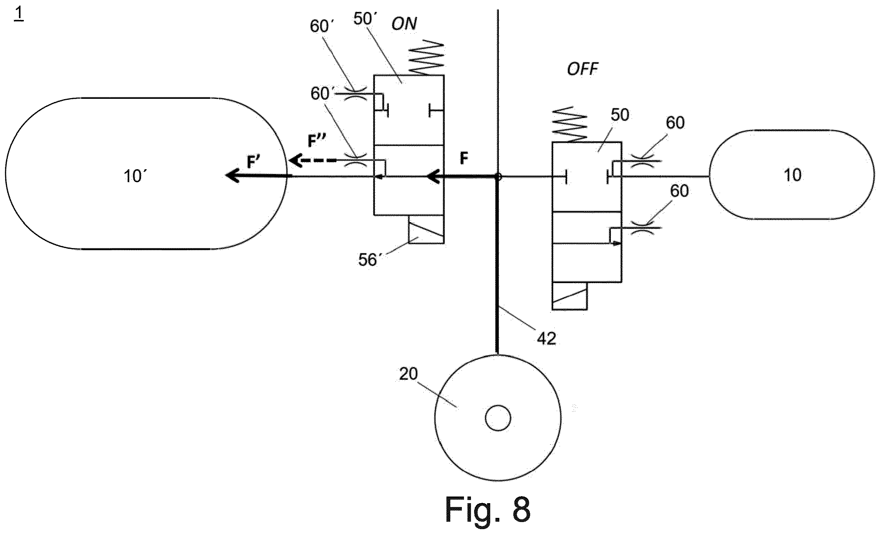

Fig. 8 shows a pneumatic partial view of an embodiment of a vehicle seat massage device 1 wherein the air vent opening 60 is arranged at an outlet 52 of the 2/2 valve 50 to the respective air bladder 10. In Fig. 7 the left bladder 10' is presently inflated, wherein the 2/2 valve 50' is set to the ON state and the solenoid 56' is engaged. In this embodiment air pump 20 provides an air throughput of F to the 2/2 valve 50'. This air throughput F is divided up into air throughput F', which flows into the bladder 10', and air throughput F'' which is simultaneously vented by the air vent opening 60' into ambiance. Although in reality the 2/2 valve 50, 50' comprises only one air vent opening 60, 60' at the outlet 52, 52' of 2/2 valve 50, 50', Fig. 8 shows two air vent opening 60, 60', one at each position of the 2/2 valve 50, 50'. This is because this single air vent 60, 60' pneumatically applies to both states (ON and OFF) of the 2/2 valve 50, 50'. The air throughput of F" is smaller than the air throughput F' into the bladder 10', thus, bladder 10' is inflated. If the 2/2 valve 50' is set to the OFF state, the air throughputs F and F' stop and the air vent 60' vents air out of the bladder 10' for deflating bladder 10'.

According to the desired massage program inflation and deflation of the individual air bladders 10 is sequentially controlled by the electronic control unit 30. It has to be noted, that it is neither necessary to inflate the respective air bladder 10 completely nor it is necessary to deflate the respective air bladder 10 completely in one inflation/deflation cycle. Inflation and deflation can be selected according to the desired needs of the passenger for adjusting the massage strength.

Figures 4 and 5 show a vehicle seat massage device 1, not according to the present invention, in more detail. The air bladders 10 are arranged in two vertical groups of three air bladders 10 and two vertical groups of two air bladders 10. The provision of air bladders 10 in groups provides a more efficient manufacturing and mounting. Each air bladder 10 is in fluid connection with an intermediary air connector 44 which comprises preferably an angle of about 90° and which is connected to an air tube 46 respectively. The air connectors 44 can comprise an air vent opening 60 in the form of a small hole having a defined effective opening size. The air tubes 46 are connected to respective 2/2 valves 50. The 2/2 valves 50 are housed within a common housing 32 that also houses the electronic control unit 30. The air pump 20 is electrically connected via electrical connector 22 and provides the compressed air via common supply line 42 to the 2/2 valves within housing 32.

### List of reference signs:

- 1: vehicle seat massage device
- 10: air bladders
- 12: inlet of bladder
- 14: distal end of bladder
- 20: air pump
- 22: electrical connector
- 30: electronic control unit
- 32: housing
- 40: air distribution elements
- 42: common supply line
- 44: air connectors
- 46: air tubes
- 50: 2/2 valves
- 52: air outlet
- 54: air inlet
- 56: solenoid
- 60: air vent openings
- 100: vehicle seat
- 102: seat part
- 104: backrest
- 106: A surface
- 108: B surface

## Claims

1. Vehicle seat massage device (1), comprising:
a. a plurality of air bladders (10), which can be arranged at the seat part (102) or the backrest (104) of a vehicle seat (100);
b. an air pump (20) for supplying air to the air bladders (10);
c. a plurality of air distribution elements (40) for distributing air from the air pump (20) to the plurality of air bladders (10);
d. a plurality of 2/2 valves (50) for controlling the air flow to the air bladders (10); and
e. a plurality of air vent openings (60) for venting air out of the air bladders (10), **characterized in that**
f. the air vent openings (60) are arranged at an outlet (52) of the 2/2 valve (50) to the respective air bladder (10).

2. Vehicle seat massage device according to claim 1, wherein the 2/2 valves (50) are electrically controlled valves.

3. Vehicle seat massage device according to claim 2, wherein the 2/2 valves (50) are solenoid valves or shape memory alloy valves.

4. Vehicle seat massage device according to one of the claims 1 to 3, wherein the air vent openings (60) have an effective opening size that is smaller than the effective opening size of the respective air distribution element (40) and of the respective 2/2 valve (50).

5. Vehicle seat massage device according to claim 4, wherein the effective opening size of one of the air vent openings (60) is 30% to 70%, preferably 40% to 60%, more preferably 50% of the effective opening size of the respective air distribution element (40) and of the respective 2/2 valve (50).

6. Vehicle seat massage device according to one of the claims 1 to 5, wherein the massage device (1) is adapted to be arranged at the A-surface of a vehicle seat (100).

7. Vehicle seat massage device according to one of the claims 1 to 6, wherein the air distribution elements (40) are air tubes.

8. Vehicle seat massage device according to one of the claims 1 to 7, further comprising an electronic control (30) unit that can individually control the 2/2 valves (50).

9. Method for the operation of a vehicle seat massage device (1) according to one of the claims 1 to 8 comprising the following steps:
a. actuating the air pump (20);
b. electrically opening a 2/2 valve (50) for selectively supplying air from the air pump (20) to the respective air bladder (10) for inflating the air bladder (10);
c. simultaneously to step b. venting air out of an air vent opening (60) which is in fluid connection with the respective air bladder (10);
d. after step b. closing the 2/2 valve (50) for stopping the air flow from the air pump (20) to the respective air bladder (10); and
e. simultaneously to step d. venting air out of the air vent opening (60) for deflating the air bladder (10).

10. Method according to claim 9, wherein the steps b. to e. are repeated continuously such that the respective air bladder is periodically inflated and deflated.

11. Method according to one of the claims 9 or 10, wherein the steps b. to e. are performed
a. with respect to all air bladders (10) simultaneously; or
b. with respect to air bladders (10) of the same height at a backrest (104) of a seat (100) simultaneously, and with a predetermined time interval to air bladders (10) of other heights; or
c. with respect to a single air bladder (10) individually; or
d. with respect to symmetrically arranged air bladders (10) simultaneously.

## Patentansprüche

1. Fahrzeugsitzmassagevorrichtung (1), umfassend:
a. eine Mehrzahl von Luftblasen (10), welche am Sitzteil (102) oder der Rückenlehne (104) eines Fahrzeugsitzes (100) angeordnet werden können;
b. eine Luftpumpe (20) zum Zuführen von Luft zu den Luftblasen (10);
c. eine Mehrzahl von Luftverteilungselementen (40) zum Verteilen von Luft von der Luftpumpe (20) zu der Mehrzahl von Luftblasen (10);
d. eine Mehrzahl von 2/2-Ventilen (50) zum Steuern des Luftstroms zu den Luftblasen (10); und
e. eine Mehrzahl von Entlüftungsöffnungen (60) zum Entlüften von Luft aus den Luftblasen (10), **dadurch gekennzeichnet, dass**
f. die Entlüftungsöffnungen (60) an einem Auslass (52) des 2/2-Ventils (50) zu der jeweiligen Luftblase (10) angeordnet sind.

2. Fahrzeugsitzmassagevorrichtung nach Anspruch 1, wobei die 2/2-Ventile (50) elektrisch gesteuerte Ventile sind.

3. Fahrzeugsitzmassagevorrichtung nach Anspruch 2, wobei die 2/2-Ventile (50) Magnetventile oder Formgedächtnislegierungsventile sind.

4. Fahrzeugsitzmassagevorrichtung nach einem der Ansprüche 1 bis 3, wobei die Entlüftungsöffnungen (60) eine effektive Öffnungsgröße aufweisen, welche kleiner ist als die effektive Öffnungsgröße des jeweiligen Luftverteilungselements (40) und des jeweiligen 2/2-Ventils (50).

5. Fahrzeugsitzmassagevorrichtung nach Anspruch 4, wobei die effektive Öffnungsgröße einer der Entlüftungsöffnungen (60) 30% bis 70%, vorzugsweise 40% bis 60%, bevorzugter 50% der effektiven Öffnungsgröße des jeweiligen Luftverteilungselements (40) und des jeweiligen 2/2-Ventils (50) beträgt.

6. Fahrzeugsitzmassagevorrichtung nach einem der Ansprüche 1 bis 5, wobei die Massagevorrichtung (1) angepasst ist, um an der A-Oberfläche eines Fahrzeugsitzes (100) angeordnet zu werden.

7. Fahrzeugsitzmassagevorrichtung nach einem der Ansprüche 1 bis 6, wobei die Luftverteilungselemente (40) Luftröhren sind.

8. Fahrzeugsitzmassagevorrichtung nach einem der Ansprüche 1 bis 7, ferner umfassend eine elektronische Steuereinheit (30), die die 2/2-Ventile (50) einzeln steuern kann.

9. Verfahren für den Betrieb einer Fahrzeugsitzmassagevorrichtung (1) nach einem der Ansprüche 1 bis 8, umfassend die folgenden Schritte:
a. Betätigen der Luftpumpe (20);
b. elektrisches Öffnen eines 2/2-Ventils (50) zum selektiven Zuführen von Luft von der Luftpumpe (20) zu der jeweiligen Luftblase (10) zum Aufblasen der Luftblase (10);
c. gleichzeitig zu Schritt b. Entlüften von Luft aus einer Entlüftungsöffnung (60), welche in Fluidverbindung mit der jeweiligen Luftblase (10) steht;
d. nach Schritt b. Schließen des 2/2-Ventils (50) zum Stoppen des Luftstroms von der Luftpumpe (20) zu der jeweiligen Luftblase (10); und
e. gleichzeitig zu Schritt d. Entlüften von Luft aus der Entlüftungsöffnung (60) zum Entleeren der Luftblase (10).

10. Verfahren nach Anspruch 9, wobei die Schritte b. bis e. kontinuierlich wiederholt werden, so dass die jeweilige Luftblase periodisch aufgeblasen und entleert wird.

11. Verfahren nach einem der Ansprüche 9 oder 10, wobei die Schritte b. bis e. durchgeführt werden
a. in Bezug auf alle Luftblasen (10) gleichzeitig; oder
b. in Bezug auf Luftblasen (10) der gleichen Höhe an einer Rückenlehne (104) eines Sitzes (100) gleichzeitig, und mit einem vorbestimmten Zeitintervall zu Luftblasen (10) anderer Höhen; oder
c. in Bezug auf eine einzelne Luftblase (10) einzeln; oder
d. in Bezug auf symmetrisch angeordnete Luftblasen (10) gleichzeitig.

## Revendications

1. Dispositif de massage pour siège de véhicule (1), comprenant :
a. une pluralité de vessies d'air (10), qui peuvent être disposées sur la partie d'assise (102) ou sur le dossier (104) d'un siège de véhicule (100) ;
b. une pompe à air (20) pour délivrer de l'air aux vessies d'air (10) ;
c. une pluralité d'éléments de distribution d'air (40) pour distribuer à la pluralité de vessies d'air (10) l'air provenant de la pompe à air (20) ;
d. une pluralité de vannes 2/2 (50) pour le contrôle du débit d'air vers les vessies d'air (10) ; et
e. une pluralité d'ouvertures d'évacuation d'air (60) pour évacuer l'air hors des vessies à air (10), **caractérisé en ce que**
f. les ouvertures d'évacuation d'air (60) sont disposées sur une sortie (52) de la vanne 2/2 (50) allant vers la vessie d'air respective (10).

2. Dispositif de massage de siège de véhicule selon la revendication 1, dans lequel les vannes 2/2 (50) sont des vannes contrôlées électriquement.

3. Dispositif de massage de siège de véhicule selon la revendication 2, dans lequel les vannes 2/2 (50) sont des électrovannes ou des vannes en alliage à mémoire de forme.

4. Dispositif de massage de siège de véhicule selon l'une des revendications 1 à 3, dans lequel les ouvertures d'évacuation d'air (60) présentent une dimension efficace d'ouverture qui est inférieure à la dimension efficace d'ouverture de l'élément de distribution d'air respectif (40) et de la vanne 2/2 respective (50).

5. Dispositif de massage de siège de véhicule selon la revendication 4, dans lequel la dimension efficace d'ouverture de l'une des ouvertures d'évacuation d'air (60) est de 30 % à 70 %, de préférence de 40 % à 60 %, très préférentiellement de 50 % de la dimension efficace d'ouverture de l'élément de distribution d'air respectif (40) et de la vanne 2/2 respective (50).

6. Dispositif de massage de siège de véhicule selon l'une des revendications 1 à 5, dans lequel le dispositif de massage (1) est apte à être disposé sur la surface de classe A d'un siège de véhicule (100).

7. Dispositif de massage de siège de véhicule selon l'une des revendications 1 à 6, dans lequel les éléments de distribution d'air (40) sont des tubes à air.

8. Dispositif de massage de siège de véhicule selon l'une des revendications 1 à 7, comprenant en outre une unité de contrôle électronique (30) qui peut contrôler individuellement les vannes 2/2 (50).

9. Procédé pour la mise en œuvre d'un dispositif de massage de siège de véhicule (1) selon l'une des revendications 1 à 8, comprenant les étapes suivantes :
a. actionnement de la pompe à air (20) ;
b. ouverture électrique d'une vanne 2/2 (50) pour délivrance sélective d'air allant de la pompe à air (20) à la vessie d'air respective (10) pour gonfler la vessie d'air (10) ;
c. en même temps que l'étape b., évacuation de l'air par une ouverture d'évacuation d'air (60) qui est en liaison fluidique avec la vessie d'air respective (10) ;
d. après l'étape b., fermeture de la vanne 2/2 (50) pour interrompre le débit d'air allant de de la pompe à air (20) à la vessie d'air respective (10) ; et
e. en même temps que l'étape d., évacuation de l'air à partir de l'ouverture d'évacuation d'air (60) pour dégonfler la vessie d'air (10).

10. Procédé selon la revendication 9, dans lequel les étapes b. à e. sont répétées de façon continue de manière à gonfler et dégonfler périodiquement la vessie d'air respective.

11. Procédé selon l'une des revendications 9 ou 10, dans lequel les étapes b. à e. sont effectuées
a. en même temps à l'égard de toutes les vessies d'air (10) ; ou
b. en même temps à l'égard des vessies d'air (10) situées à la même hauteur sur un dossier (104) d'un siège (100), et avec un intervalle temporel prédéterminé à l'égard des vessies d'air (10) aux autres hauteurs ; ou
c. individuellement à l'égard d'une unique vessie d'air (10) ; ou
d. en même temps à l'égard de vessies d'air (10) disposées symétriquement.
